(19) Europäisches Patentamt
European Patent Office
Office européen des brevets

(11) **EP 1 862 503 B1**

(12) **EUROPEAN PATENT SPECIFICATION**

(45) Date of publication and mention
of the grant of the patent:
**05.03.2014 Bulletin 2014/10**

(21) Application number: **06729326.6**

(22) Date of filing: **17.03.2006**

(51) Int Cl.:
*C08L 29/04* (2006.01)     *C08L 15/00* (2006.01)
*B32B 27/28* (2006.01)     *C08J 5/18* (2006.01)
*B65D 81/26* (2006.01)     *C08L 23/06* (2006.01)
*C08L 23/12* (2006.01)     *C08L 53/02* (2006.01)

(86) International application number:
**PCT/JP2006/305336**

(87) International publication number:
**WO 2006/101021 (28.09.2006 Gazette 2006/39)**

(54) **GAS BARRIER RESIN COMPOSITION HAVING OXYGEN-ABSORBING PROPERTY AND GAS BARRIER STRUCTURE HAVING OXYGEN-ABSORBING PROPERTY INCLUDING THE SAME**

GASSPERREN-HARZZUSAMMENSETZUNG MIT SAUERSTOFFABSORBIERENDER EIGENSCHAFT SOWIE DIESE ZUSAMMENSETZUNG ENTHALTENDE GASSPERRENSTRUKTUR MIT SAUERSTOFFABSORBIERENDER EIGENSCHAFT

COMPOSITION DE RESINE BARRIERE AUX GAZ AYANT UNE PROPRIETE D'ABSORPTION DE L'OXYGENE ET STRUCTURE BARRIERE AUX GAZ AYANT UNE PROPRIETE D'ABSORPTION DE L'OXYGENE COMPRENANT CELLE-CI

(84) Designated Contracting States:
**AT BE BG CH CY CZ DE DK EE ES FI FR GB GR HU IE IS IT LI LT LU LV MC NL PL PT RO SE SI SK TR**

(30) Priority: **23.03.2005 JP 2005083398**

(43) Date of publication of application:
**05.12.2007 Bulletin 2007/49**

(73) Proprietor: **Zeon Corporation**
**Chiyoda-ku**
**Tokyo 100-8246 (JP)**

(72) Inventor: **KITAHARA, Shizuo**
**Tokyo, 1008246 (JP)**

(74) Representative: **Albrecht, Thomas**
**Kraus & Weisert**
**Patent- und Rechtsanwälte**
**Thomas-Wimmer-Ring 15**
**80539 München (DE)**

(56) References cited:
**WO-A-2005/053837**    **WO-A-2005/092940**
**JP-A- 2002 146 217**    **JP-A- 2005 008 823**

**Description**

TECHNICAL FIELD

The present invention relates to a gas barrier resin composition that exhibits excellent oxygen absorbability and to a structure comprising the same. In more detail, the invention relates to a gas barrier resin composition that exhibits excellent oxygen absorbability and further excellent adhesiveness to olefin resins and to a multi-layer structure comprising the same.

BACKGROUND ART

Saponified products of an ethylene/vinyl acetate copolymer are appreciatively used as a packaging film or sheet and as a material for a container such as a bottle because they are thermoplastic, are able to be molded by various methods such as melt extrusion molding, injection molding or blow molding and have oxygen barrier properties.

However, it cannot be always said that their oxygen barrier properties are sufficient, and some improving methods are proposed. For example, Patent Document 1 proposes an oxygen barrier resin composition comprising a saponified product of an ethylene/vinyl acetate copolymer and an oxidation catalyst such as cobalt stearate. Patent Documents 2 and 3 disclose an oxygen barrier resin composition comprising a saponified product of an ethylene/vinyl acetate copolymer and, dispersed therein, a composition comprised of a polyolefin and an oxidation catalyst, and an oxygen barrier resin composition comprising a polyolefin, a saponified product of an ethylene/vinyl acetate copolymer and an oxidation catalyst.

However, oxygen absorbability is merely improved a little by these technologies, and on the other hand, a part of the saponified product of an ethylene/vinyl acetate copolymer is oxidized due to the added oxidation catalyst causing a problem that an odor is generated.

The saponified product of an ethylene/vinyl acetate copolymer also involves problems that it is inferior in compatibility especially with a polyolefin resin and that when a film, a bottle or the like is molded from a resin composition containing the both by means of extrusion molding or other methods, a heterogeneous foreign substance with phase separation is easily formed and the appearance is remarkably impaired.

    Patent Document 1: JP-A-4-211444
    Patent Document 2: JP-A-5-156095
    Patent Document 3: JP-A-5-170950

EP-A-1 731 543 and EP-A-1 704 917 refer to polyvinyl alcohol and a partially or completely saponified product of an ethylene-vinyl alcohol copolymer as specific examples of a polyvinyl alcohol resin which can be used in combination with an oxygen scavenger comprised of a block copolymer having a cyclized poly (conjugated diene) block. However, there is no disclosure in these references with respect to an ethylene vinyl alcohol copolymer having a specific oxygen permeation rate, nor do these documents disclose the ethylene content of ethylene/vinyl alcohol copolymer. Moreover, these references do not disclose the oxygen permeation rate of the polymer composition.

JP-A- 2005 008 823 discloses an oxygen absorbent resin composition containing a maleic acid (anhydride)-modified polyene polymer and a gas barrier resin having a specific oxygen permeation coefficient.

EP-A-1 314 761 discloses a resin composition having excellent gas barrier properties and the like besides oxygen scavenging properties.

Both documents refer to a conjugated diene polymer as a maleic acid (anhydride)- modified polyene polymer or as a thermoplastic resin having a carbon-carbon double bond. However they neither refer to nor suggest a cyclized product of the conjugated diene polymer, and merely teach the addition of a transition metal salt to the polymer resin as a method for causing the polymer resin to absorb oxygen.

DISCLOSURE OF THE INVENTION

PROBLEMS THAT THE INVENTION IS TO SOLVE

Accordingly, an object of the invention is to provide a gas barrier resin composition that exhibits excellent oxygen absorbability and further excellent adhesiveness to olefin resins, a structure comprising the same and a multi-layer structure comprising the same.

MEANS FOR SOLVING THE PROBLEMS

In order to solve the foregoing problems, the present inventor made extensive and intensive investigations regarding the kind of a polymer constituting a gas barrier resin composition and, as a result, has found that a resin composition comprising a specified cyclized product of a conjugated diene polymer and a saponified product of an ethylene/vinyl acetate copolymer suits the foregoing purposes, leading to accomplishment of the invention on the basis of this knowledge.

Thus, according to the invention, an oxygen-absorbing gas barrier resin composition comprising a cyclized product of a conjugated diene polymer and an ethylene/vinyl alcohol copolymer having an oxygen permeation rate of from 0.2 to 20 cc (20 $\mu$m)/m$^2$.day.atm (at 20°C and a relative humidity of 65%) according to claim 1 is provided.

The terms "cc (20 $\mu$m)/m$^2$.day.atm (at 20°C and a relative humidity of 65%)" as referred to in the invention is a unit to express the amount of oxygen which permeates per day through a film having a thickness of 20 $\mu$m and an area of 1 m$^2$ under a differential pressure of one atmosphere under a measurement condition at 20°C and a relative humidity of 65%.

The cyclized product of a conjugated diene polymer is preferably one having a rate of reduction of unsaturated bonds of 10% or more.

The cyclized product of a conjugated diene polymer is more preferably one having a rate of reduction of unsaturated bonds of from 30 to 75%.

In the invention, the cyclized product of a conjugated diene polymer is preferably a cyclized product of polyisoprene and/or a cyclized product of a block copolymer comprising an aromatic vinyl polymer block having a weight-average molecular weight of from 1,000 to 500,000 and at least one conjugated diene polymer block.

In the invention, the cyclized product of a conjugated diene polymer is preferably one containing not more than 8,000 ppm of an antioxidant.

In the oxygen-absorbing gas barrier resin composition of the invention, a weight ratio of the cyclized product of a conjugated diene polymer and the ethylene/vinyl alcohol copolymer is from 50/50 to 5/95.

The weight ratio of the cyclized product of a conjugated diene polymer and the ethylene/vinyl alcohol copolymer [(cyclized product of a conjugated diene polymer)/(ethylene/vinyl alcohol copolymer)] is preferably from 40/60 to 20/80.

It is preferable that the oxygen-absorbing gas barrier resin composition of the invention further contains an $\alpha$-olefin resin other than the ethylene/vinyl alcohol copolymer having an oxygen permeation rate of from 0.2 to 20 cc (20 $\mu$m)/m$^2$.day.atm (at 20°C and a relative humidity of 65%).

In the oxygen-absorbing gas barrier resin composition of the invention, the content of the $\alpha$-olefin resin other than the ethylene/vinyl alcohol copolymer having an oxygen permeation rate of from 0.2 to 20 cc (20 $\mu$m)/m$^2$.day.atm (at 20°C and a relative humidity of 65%) is preferably from 10 to 150 parts by weight based on 100 parts by weight of the cyclized product of a conjugated diene polymer.

According to the invention, an oxygen-absorbing gas barrier structure prepared by molding the oxygen-absorbing gas barrier resin composition of the invention is also provided.

The oxygen-absorbing gas barrier structure of the invention has an oxygen permeation rate of not more than 1 cc (20 $\mu$m)/m$^2$.day.atm (at 20°C and a relative humidity of 65%).

According to the invention, an oxygen-absorbing gas barrier multi-layer structure comprising a layer of the foregoing oxygen-absorbing gas barrier structure (hereinafter referred to as "oxygen-absorbing gas barrier structure layer") and a sealing material layer is also provided.

According to the invention, a packaging material comprising the foregoing oxygen-absorbing gas barrier multi-layer structure is also provided.

ADVANTAGES OF THE INVENTION

The oxygen-absorbing gas barrier resin composition of the invention exhibits excellent oxygen absorbability and further excellent adhesiveness to olefin resins. Also, since the oxygen-absorbing gas barrier resin composition of the invention is not required of use of a transition metal, it is highly safe, does not bring a problem in use for a metal detector, a microwave oven, and is free from a risk of a reduction in strengths due to deterioration of a packaging material. Since the oxygen-absorbing gas barrier resin composition of the invention has both excellent oxygen absorbability and gas barrier properties and also has excellent adhesiveness to olefin resins, lamination thereof with a sealing material gives an oxygen-absorbing gas barrier multi-layer structure without a separate gas barrier layer.

The oxygen-absorbing gas barrier multi-layer structure of the invention exhibits excellent oxygen absorbability and gas barrier properties and is suitable as a packaging material for various foodstuffs, chemicals, drugs, cosmetics.

## BEST MODES FOR CARRYING OUT THE INVENTION

The oxygen-absorbing gas barrier resin composition of the invention comprises a cyclized product of a conjugated diene polymer and an ethylene/vinyl alcohol copolymer having an oxygen permeation rate of from 0.2 to 20 cc (20 $\mu$m)/m$^2$.day.atm (at 20°C and a relative humidity of 65%).

The cyclized product of a conjugated diene polymer used in the invention is one obtained by a cyclization reaction of a conjugated diene polymer in the presence of an acid catalyst.

As the conjugated diene polymer, homopolymers and copolymers of a conjugated diene monomer and copolymers of a conjugated diene monomer with a monomer copolymerizable therewith can be used.

The conjugated diene monomer is not particularly limited, and specific examples thereof include 1,3-butadiene, isoprene, 2,3-dimethyl-1,3-butadiene, 2-phenyl-1,3-butadiene, 1,3-pentadiene, 2-methyl-1,3-pentadiene, 1,3-hexadiene, 4,5-diethyl-1,3-octadiene, 3-butyl-1,3-octadiene.

These monomers may be used singly or in combination of two or more kinds thereof.

Examples of other monomer copolymerizable with the conjugated diene monomer include aromatic vinyl monomers such as styrene, o-methylstyrene, p-methylstyrene, m-methylstyrene, 2,4-dimethylstyrene, ethylstyrene, p-t-butylstyrene, $\alpha$-methylstyrene, $\alpha$-methyl-p-methylstyrene, o-chlorostyrene, m-chlorostyrene, p-chlorostyrene, p-bromostyrene, 2,4-dibromostyrene or vinylnaphthalene; linear olefin monomers such as ethylene, propylene or 1-butene; cyclic olefin monomers such as cyclopentene or 2-norbornene; non-conjugated diene monomers such as 1,5-hexadiene, 1,6-heptadiene, 1,7-octadiene, dicyclopentadiene or 5-ethylidene-2-norbornene; (meth)acrylic esters such as methyl (meth) acrylate or ethyl (meth)acrylate; other (meth)acrylic acid derivatives such as (meth)acrylonitrile or (meth)acrylamide.

These monomers may be used singly or in combination of two or more kinds thereof.

Specific examples of the homopolymer and the copolymer of a conjugated diene polymer include a natural rubber (NR), a polyisoprene rubber (IR), a polybutadiene rubber (BR), a butadiene/isoprene copolymer rubber (BIR). Of these, a polyisoprene rubber and a polybutadiene rubber are preferable, and a polyisoprene rubber is more preferable.

These conjugated diene polymers may be used singly or in combination of two or more kinds thereof.

Specific examples of the copolymer of a conjugated diene monomer with a monomer copolymerizable therewith include a styrene/isoprene rubber (SIR), a styrene/butadiene rubber (SBR), an isoprene/isobutylene copolymer rubber (IIR), an ethylene/propylene/diene copolymer rubber (EPDM).

Of these, a block copolymer comprising an aromatic vinyl polymer block having a weight-average molecular weight of from 1,000 to 500,000 and at least one conjugated diene polymer block is preferable.

These conjugated diene polymers may be used singly or in combination of two or more kinds thereof.

The content of the conjugated diene monomer unit in the conjugated diene polymer is properly chosen within the range where the effects of the invention are not impaired and is usually 40% by mole or more, preferably 60% by mole or more, and more preferably 75% by mole or more. When the content of the conjugated diene monomer unit is too low, there may be a risk that it is difficult to obtain a rate of reduction of unsaturated bonds falling within an appropriate range.

A polymerization method of the conjugated diene polymer may follow a usual way and, for example, is carried out by means of solution polymerization or emulsion polymerization by using an appropriate catalyst such as a Ziegler polymerization catalyst containing titanium or the like as a catalyst component, an alkyllithium polymerization catalyst or a radical polymerization catalyst.

The cyclized product of a conjugated diene polymer used in the invention is obtained by subjecting the conjugated diene polymer to a cyclization reaction in the presence of an acid catalyst to cause a conjugated diene monomer unit segment in the foregoing conjugated diene polymer to cyclize.

As the acid catalyst used in the cyclization reaction, known acid catalysts can be used. Specific examples thereof include sulfuric acid; organic sulfonic acid compounds such as fluoromethanesulfonic acid, difluoromethanesulfonic acid, p-toluenesulfonic acid, xylenesulfonic acid, alkylbenzenesulfonic acids containing an alkyl group having from 2 to 18 carbon atoms or anhydrides and alkyl esters thereof; Lewis acids such as boron trifluoride, boron trichloride, tin tetrachloride, titanium tetrachloride, aluminum chloride, diethylaluminum monochloride, ethylammonium chloride, aluminum bromide, antimony pentachloride, tungsten hexachloride or iron chloride. These acid catalysts may be used singly or in combination of two or more kinds thereof. Of these, organic sulfonic acid compounds are preferable; and p-toluenesulfonic acid and xylenesulfonic acid are more preferable.

The used amount of the acid catalyst is usually from 0.05 to 10 parts by weight, preferably from 0.1 to 5 parts by weight, and more preferably from 0.3 to 2 parts by weight based on 100 parts by weight of the conjugated diene polymer.

The cyclization reaction is usually carried out in a hydrocarbon solvent solution of the conjugated diene polymer.

The hydrocarbon solvent is not particularly limited so far as it does not impair the cyclization reaction, and examples thereof include aromatic hydrocarbons such as benzene, toluene, xylene or ethylbenzene; aliphatic hydrocarbons such as n-pentane, n-hexane, n-heptane or n-octane; alicyclic hydrocarbons such as cyclopentane or cyclohexane. A boiling point of such a hydrocarbon solvent is preferably 70°C or higher.

The solvent used in the polymerization reaction of the conjugated diene polymer and the solvent used in the cyclization reaction may be the same kind. In that case, the cyclization reaction can be carried out subsequent to the polymerization reaction by adding the acid catalyst for the cyclization reaction to a polymerization reaction solution in which the polymerization reaction has completed.

The amount to be used of the hydrocarbon solvent is such that the solids content of the conjugated diene polymer is usually in the range of from 5 to 60% by weight, and preferably from 20 to 40% by weight.

The cyclization reaction can be carried out under any pressure condition of elevated pressure, reduced pressure or atmospheric pressure and is desirably carried out under atmospheric pressure from the standpoint of simplicity and easiness of operations. When the cyclization reaction is carried out in a dry gas stream, and especially in an atmosphere of dry nitrogen or dry argon, it is possible to suppress side reactions to be caused due to the moisture.

Reaction temperature and reaction time in the cyclization reaction are not particularly limited. The reaction temperature is usually from 50 to 150°C, and preferably from 70 to 110°C; and the reaction time is usually from 0.5 to 10 hours, and preferably from 2 to 5 hours.

After the cyclization reaction, the acid catalyst is deactivated by a usual way; the acid catalyst residue is removed; and the hydrocarbon solvent is then removed, whereby a cyclized product of a conjugated diene polymer in a solid state can be obtained.

A rate of reduction of unsaturated bonds of the cyclized product of a conjugated diene polymer used in the invention is 10% or more. The rate of reduction of unsaturated bonds is preferably from 30 to 75%, and more preferably from 40 to 60%. The rate of reduction of unsaturated bonds of the cyclized product of a conjugated diene polymer can be adjusted by choosing properly the amount of the acid catalyst, the reaction temperature, the reaction time in the cyclization reaction.

When the rate of reduction of unsaturated bonds of the cyclized product of a conjugated diene polymer falls within the foregoing range, the oxygen absorbability of the oxygen-absorbing gas barrier resin composition of the invention is excellent.

In the conjugated diene monomer unit segment in the conjugated diene polymer, the rate of reduction of unsaturated bonds is an index to express a degree of reduction of unsaturated bonds due to the cyclization reaction and is a numerical value determined in the following manner. That is, in the conjugated diene monomer unit segment in the conjugated diene polymer, a ratio of a peak area of protons bonded directly to the double bond relative to a peak area of all protons is determined before and after the cyclization reaction, respectively by means of a proton NMR analysis, and a rate of reduction thereof is calculated.

In the conjugated diene monomer unit segment in the conjugated diene polymer, a peak area of all protons and a peak area of protons bonded directly to the double bond before the cyclization reaction are defined as SBT and SBU, respectively; and a peak area of all protons and a peak area of protons bonded directly to the double bond after the cyclization reaction are defined as SAT and SAU, respectively. A peak area ratio (SB) of the protons bonded directly to the double bond before the cyclization reaction is determined by "SB = SBU/SBT"; and a peak area ratio (SA) of the protons bonded directly to the double bond after the cyclization reaction is determined by "SA = SAU/SAT".

Accordingly, the rate of reduction of unsaturated bonds is determined according to the following expression.

$$[\text{Rate of reduction of unsaturated bonds (\%)}] = 100 \times (SB - SA)/SB$$

A weight-average molecular weight of the cyclized product of a conjugated diene polymer is usually from 1,000 to 1,000,000, preferably from 10,000 to 700,000, and more preferably from 30,000 to 500,000 in terms of standard polystyrene as measured by gel permeation chromatography. The weight-average molecular weight of the cyclized product of a conjugated diene polymer can be adjusted by choosing properly a weight-average molecular weight of the conjugated diene polymer to be provided for the cyclization.

When the weight-average molecular weight of the cyclized product of a conjugated diene polymer is too low, there may be a risk that film formation is difficult and that mechanical strengths are reduced. When the weight-average molecular weight of the cyclized product of a conjugated diene polymer is too large, there may be a risk that not only solution viscosity increases during the cyclization reaction causing handling difficult, but also processability at the extrusion molding is reduced.

Though the amount of a gel (toluene-insoluble matter) of the cyclized product of a conjugated diene polymer is usually not more than 10% by weight, and preferably not more than 5% by weight, it is especially preferable that the cyclized product of a conjugated diene polymer substantially contains no gel. When the amount of the gel is high, there may be a risk that smoothness of a film is impaired.

In the invention, in order to guarantee stability at the processing of the cyclized product of a conjugated diene polymer, an antioxidant can be added in the cyclized product of a conjugated diene polymer. The amount of the antioxidant is usually in the range of not more than 8,000 ppm, preferably from 10 to 5,000 ppm, and more preferably from 50 to 3,000 ppm relative to the weight of the cyclized product of a conjugated diene polymer.

However, since the oxygen absorbability is reduced when the added amount of the antioxidant is too large, it is important to adjust properly the added amount thereof taking into consideration stability at the processing.

The antioxidant is not particularly limited so far as it is usually used in the field of a resin material or a rubber material. Representative examples of such an antioxidant include hindered phenolic, phosphorus-containing, and lactone antioxidants. An amine light stabilizer (HALS) may also be added. These antioxidants can also be used in combination of two or more kinds thereof.

Specific examples of the hindered phenolic antioxidant include 2,6-di-t-butyl-p-cresol, pentaerythritol tetrakis [3-(3,5-di-t-butyl-4-hydroxyphenyl)propionate], thiodiethylene bis[3-(3,5-di-t-butyl-4-hydroxyphenyl)propionate], octadeyl-3-(3,5-di-t-butyl-4-hydroxyphenyl)propionate, N,N'-hexane-1,6-diyl bis[3-(3,5-di-t-butyl-4-hydroxyphenyl)propionamide], diethyl [[3,5-bis(1,1-dimethylethyl)-4-hydroxyphenyl]methyl]phosphonate, 3,3',3",5,5',5"-hexa-t-butyl-a,a', a"-(mesitylene-2,4,6-triyl)tri-p-cresol, hexamethylene bis[3-(3,5-di-t-butyl)-4-hydroxyphenyl]propionate, tetrakis[methylene-3-(3,5-di-t-butyl-4-hydroxyphenyl)propionate]methane, n-octadecyl-3-(4'-hydroxy-3,5'-di-t-butylphenyl)propionate, 1,3,5-tris(3,5-di-t-butyl-4-hydroxybenzyl)-1,3,5-triazine-2,4,6(1H,3H,5H)-trione, 2,4-bis(n-octylthio)-6-(4-hydroxy-3,5-di-t-butylanilino)-1,3,5-triazine, tris-(3,5-di-t-butyl-4-hydroxybenzyl)-isocyanurate, 2-t-butyl-6-(3'-t-butyl-2'-hydroxy-5'-methylbenzyl)-4-methylphenyl acrylate, 2-[1-(2-hydroxy-3,5-di-t-phenyl)ethyl]-4,6-di-t-pentylphenyl acrylate.

Specific examples of the phosphorus-containing antioxidant include 2,2'-methylenebis(4,6-di-t-butylphenyl) octyl phosphite, tris(2,4-di-t-butylphenyl) phosphite, bis[2,4-bis(1,1-dimethylethyl)-6-methylphenyl]ethyl phosphite, tetrakis(2,4-di-t-butylphenyl) [1,1-biphenyl]-4,4'-diyl bisphosphonite, bis(2,4-di-t-butylphenyl)pentaerythritol diphosphite, bis(2,6-di-t-butyl-4-methylphenyl)pentaerythritol diphosphite.

A lactone antioxidant as a reaction product between 5,7-di-t-butyl-3-(3,4-dimethylphenyl)-3H-benzofuran-2-one or the like and o-xylene may be used jointly.

Specific examples of the amine light stabilizer (HALS) include bis(2,2,6,6-tetramethyl-4-piperidyl)sebacate.

The ethylene/vinyl alcohol copolymer as another essential constitutional component of the oxygen-absorbing gas barrier resin composition of the invention is a copolymer comprising ethylene and vinyl alcohol as major constitutional units in the structure and actually, is obtained by saponifying a copolymer of ethylene with a fatty acid vinyl ester by an alkaline catalyst.

Representative examples of the fatty acid vinyl ester to be copolymerized with ethylene include vinyl acetate, and besides, vinyl propionate, vinyl pivalate may be used. The ethylene/vinyl alcohol copolymer used in the invention is not particularly limited by the saponification method.

In the ethylene/vinyl alcohol copolymer used in the invention, an ethylene content is 15% to 45% by mole , preferably 30% to 45% by mole, and more preferably from 35 to 45% by mole. The ethylene content can be determined by means of a nuclear magnetic resonance (NMR) method.

When the ethylene content falls within this range, compatibility with the cyclized product of a conjugated diene polymer is good, and gas barrier properties of the obtained resin composition, comprising a cyclized product of a conjugated diene polymer and an ethylene/vinyl alcohol copolymer, are excellent.

The ethylene/vinyl alcohol copolymer may be used singly or in combination of two or more kinds thereof.

When two or more kinds of ethylene/vinyl alcohol copolymers having an ethylene content different from each other are used jointly, the ethylene content in the ethylene/vinyl alcohol copolymer mixture can be determined from a blending weight ratio thereof.

A degree of saponification of a vinyl ester segment of the ethylene/vinyl alcohol copolymer (ratio of a monomer unit segment having a vinyl alcohol structure to the total sum of a monomer unit segment having a vinyl alcohol structure and a monomer unit segment having a vinyl ester structure) is suitably 90% by mole or more, more suitably 95% by mole or more, and especially suitably 97% by mole or more.

The degree of saponification can be determined by means of a nuclear magnetic resonance (NMR) method.

When the degree of saponification of the ethylene/vinyl alcohol copolymer falls within the foregoing range, gas barrier properties of the resin composition comprising a cyclized product of a conjugated diene polymer and the ethylene/ vinyl alcohol copolymer are excellent. The ethylene/vinyl alcohol copolymer has good thermal stability, and gives a molding of the resin composition free from the generation of foreign substances such as gel or so-called spitting.

When two or more kinds of ethylene/vinyl alcohol copolymers having a different degree of saponification from each other are used jointly, the degree of saponification of the mixture is determined from a blending weight ratio thereof.

It is necessary that the ethylene/vinyl alcohol copolymer used in the invention has an oxygen permeation rate of from 0.2 to 20 cc (20 $\mu$m)/m$^2$.day.atm for a film having a thickness of 20 $\mu$m when measured under a condition at 20°C and a relative humidity of 65%. That is, it is necessary that a volume of oxygen that permeates per day through a film having a thickness of 20 $\mu$m and an area of 1 m$^2$ under a differential pressure of one atmosphere is from 0.2 to 20 cc under the foregoing temperature and humidity condition.

The oxygen permeation rate of the ethylene/vinyl alcohol copolymer is preferably from 0.2 to 10 cc (20 $\mu$m) /m$^2$.day.atm (at 20°C and a relative humidity of 65%), and more preferably from 0.2 to 2 cc (20 $\mu$m)/m$^2$.day.atm (at 20°C and a relative humidity of 65%).

In the oxygen-absorbing gas barrier resin composition of the invention, a weight ratio of the cyclized product of a conjugated diene polymer and the ethylene/vinyl alcohol copolymer is from 50/50 to 5/95, and preferably from 40/60 to 20/80.

When the weight ratio of the cyclized product of a conjugated diene polymer and the ethylene/vinyl alcohol copolymer falls within the foregoing range, the oxygen absorbability of the obtained resin composition is good.

The oxygen-absorbing gas barrier resin composition of the invention may contain, in addition to the cyclized product of a conjugated diene polymer and the ethylene/vinyl alcohol copolymer, an $\alpha$-olefin resin other than the ethylene/ vinyl alcohol copolymer having an oxygen permeation rate of from 0.2 to 20 cc (20 $\mu$m)/m$^2$.day.atm (at 20°C and a relative humidity of 65%).

When the $\alpha$-olefin resin other than the ethylene/vinyl alcohol copolymer having an oxygen permeation rate of from 0.2 to 20 cc (20 $\mu$m)/m$^2$.day.atm (at 20°C and a relative humidity of 65%) is added, the oxygen-absorbing gas barrier resin composition of the invention is excellent in handling properties.

The content of the $\alpha$-olefin resin other than the ethylene/vinyl alcohol copolymer having an oxygen permeation rate of from 0.2 to 20 cc (20 $\mu$m)/m$^2$.day.atm (at 20°C and a relative humidity of 65%) is preferably from 10 to 150 parts by weight, and more preferably from 30 to 100 parts by weight based on 100 parts of the cyclized product of a conjugated diene polymer.

The $\alpha$-olefin resin other than the ethylene/vinyl alcohol copolymer having an oxygen permeation rate of from 0.2 to 20 cc (20 $\mu$m)/m$^2$.day.atm (at 20°C and a relative humidity of 65%), which can be suitably used in the oxygen-absorbing gas barrier resin composition of the invention, may be any one of a homopolymer of an $\alpha$-olefin, a copolymer of two or more kinds of $\alpha$-olefins or a copolymer of an $\alpha$-olefin with a monomer other than the $\alpha$ olefin or may be one obtained by modifying such a (co)polymer.

Specific examples of the poly-$\alpha$-olefin resin include homopolymers or copolymers of an $\alpha$-olefin such as ethylene or propylene, for example, $\alpha$-olefin homopolymers inclusive of polyethylenes such as linear low-density polyethylene (LLDPE), low-density polyethylene (LDPE), medium-density polyethylene (MDPE), high-density polyethylene (HDPE) or metallocene polyethylene, polypropylene, metallocene polypropylene, polymethylpentene, polybutene; copolymers of ethylene with other $\alpha$-olefin, for example, ethylene/propylene random copolymers, ethylene/propylene block copolymers, ethylene/propylene/polybutene-1 copolymers, ethylene/cyclic olefin copolymers; copolymers, composed mainly of an $\alpha$-olefin, of an $\alpha$-olefin with a carboxylic acid unsaturated alcohol and saponified products thereof, for example, ethylene/vinyl acetate copolymers, ethylene/vinyl alcohol copolymers; copolymers, composed mainly of an $\alpha$-olefin, of an $\alpha$-olefin with an $\alpha,\beta$-unsaturated carboxylic acid ester or an $\alpha,\beta$-unsaturated carboxylic acid and for example, ethylene/ $\alpha,\beta$-unsaturated carboxylic acid ester copolymers (for example, ethylene/ethyl acrylate copolymers, ethylene/methyl methacrylate copolymers), ethylene/$\alpha,\beta$-unsaturated carboxylic acid copolymers (for example, ethylene/acrylic acid copolymers, ethylene/methacrylic acid copolymers), and the like; acid-modified poly-$\alpha$-olefin resins obtained by modifying an $\alpha$-olefin (co)polymer such as polyethylene or polypropylene with an unsaturated carboxylic acid such as acrylic acid, methacrylic acid, maleic acid, maleic anhydride, fumaric acid or itaconic acid; ionomer resins obtained by making an Na ion or a Zn ion act on a copolymer of ethylene and methacrylic acid; mixtures thereof.

Of these resins, polyethylene, polypropylene, and random and block ethylene/propylene copolymers are preferable.

The oxygen-absorbing gas barrier resin composition of the invention may contain a known oxygen-absorbing component other than the cyclized product of a conjugated diene polymer so far as the effects of the invention are not impaired. The amount of the oxygen-absorbing component other than the cyclized product of a conjugated diene polymer is less than 50% by weight, preferably less than 40% by weight, and more preferably less than 30% by weight relative to the whole amount of the oxygen-absorbing components (the total sum of the cyclized product of a conjugated diene polymer and the oxygen-absorbing component other than the cyclized product of a conjugated diene polymer).

In the oxygen-absorbing gas barrier resin composition of the invention, a resin other than the cyclized product of a conjugated diene polymer, the ethylene/vinyl alcohol copolymer having an oxygen permeation rate of from 0.2 to 20 cc (20 $\mu$m)/m$^2$.day.atm (at 20°C and a relative humidity of 65%) and the $\alpha$-olefin resin may be used jointly. The used amount thereof is not particularly limited so far as the effects of the invention are not impaired and is preferably not more than 20% by weight relative to the whole amount of the oxygen-absorbing gas barrier resin composition.

Specific examples of such a resin include polyesters such as polyethylene terephthalate or polybutylene terephthalate; polyamide resins such as nylon 6, nylon 66, nylon 610, nylon 11, nylon 12, MXD nylon (poly-m-xylylene adipamide) or a copolymer thereof; polyaramid resins; polycarbonate resins; polystyrene resins; polyacetal resins; fluorocarbon resins; thermoplastic polyurethanes such as polyether-based, adipate ester polyether-based, caprolactone ester polyether-based or polycarbonic acid ester polyether-based thermoplastic polyurethanes; vinyl halide resins such as polyvinylidene chloride or polyvinyl chloride; polyacrylonitrile; mixtures thereof.

Such a resin used jointly can be properly chosen depending upon the purpose as an oxygen-absorbing gas barrier structure, taking into consideration desired requirement such as gas barrier properties; mechanical properties including strength, toughness, rigidity, and the like; heat resistance; printability; transparency; adhesiveness. These resins may be used singly or in combination of two or more kinds thereof.

A method for preparing the oxygen-absorbing gas barrier resin composition is not particularly limited, and the cyclized product of a conjugated diene polymer, the ethylene/vinyl alcohol copolymer having an oxygen permeation rate of from 0.2 to 20 cc (20 $\mu$m)/m$^2$.day.atm (at 20°C and a relative humidity of 65%), and other resins and various additives used as occasion demands may be mixed by an arbitrary method. Concretely, the preparation can be carried out using a kneading apparatus of every kind such as a single-screw extruder, a twin-screw extruder or other multi-screw extruder, a Banbury mixer, a roll or a kneader. The mixing temperature is preferably in the range of from 150 to 250°C.

The oxygen-absorbing gas barrier structure of the invention is obtained by molding an oxygen-absorbing gas barrier resin composition of the invention.

The shape of the structure is not particularly limited, and representative examples thereof include a sheet form, a film form, a plate form.

A method for molding the oxygen-absorbing gas barrier resin composition into a structure is not particularly limited, and a method corresponding to a desired shape of the structure may be employed. Examples of the method for molding the oxygen-absorbing gas barrier resin composition into a film include a solution casting method in which, after dissolution of the resin composition constituting each layer in a solvent, the solution is applied on a generally flat surface and dried. A T-die method film, a blown film, or the like is obtained, for example, by melting and kneading a resin composition constituting each layer or the like by an extruder and then extruding the mixture into a prescribed shape by passing through a T-die, a circular die (ring die). As the extruder, kneading machines such as a single-screw extruder, a twin-screw extruder or a Banbury mixer can be used. The T-die film can be formed into a biaxially stretched film by biaxial stretching.

The oxygen-absorbing gas barrier structure of the invention may be one having, on the surface thereof, laminated a metallic foil or formed a metal thin film by means of vapor deposition.

In such cases, aluminum having low gas permeability is preferable as the metal.

The oxygen-absorbing gas barrier structure may have deposited on the surface thereof a metal oxide such as silica or alumina singly or jointly.

The oxygen-absorbing gas barrier structure has a function to hinder the permeation of a gas. When a packaging material in a bag-like shape, for example, is constituted of the oxygen-absorbing gas barrier structure as the outermost layer, the oxygen-absorbing gas barrier structure hinders the permeation of a gas such as oxygen.

When a bag-like packaging container, for example, is constituted using a packaging material comprised of an oxygen-absorbing gas barrier structure layer as an external layer and a sealing material layer as an inner layer, the oxygen-absorbing gas barrier structure layer serves as a layer having a function to absorb oxygen on the inside of the packaging material via the sealing material layer.

The oxygen-absorbing gas barrier structure of the invention has an oxygen permeation rate of not more than 1 cc (20 $\mu$m)/m$^2$.day.atm (at 20°C and a relative humidity of 65%), and preferably not more than 0.5 cc (20 $\mu$m)/m$^2$.day.atm (at 20°C and a relative humidity of 65%).

The oxygen-absorbing gas barrier multi-layer structure of the invention comprises a laminate of the oxygen-absorbing gas barrier structure layer of the invention and a sealing material layer.

In the oxygen-absorbing gas barrier multi-layer structure of the invention, the sealing material layer is a layer which, when melted by heat and mutually bonded (heat-sealed), has a function to form in the packaging container a space isolated from the outside of a packaging container constituted of the oxygen-absorbing gas barrier multi-layer structure of the invention and which makes oxygen permeate therethrough and be absorbed by the oxygen-absorbing gas barrier resin structure layer while preventing direct contact between the oxygen-absorbing gas barrier resin structure layer and a material to be packaged on the inside of the packaging container.

Specific examples of a heat-sealable resin used for forming the sealing material layer include $\alpha$-olefins enumerated as those which can be suitably used for the oxygen-absorbing gas barrier resin composition of the invention. There is no particular limitation on the ethylene/vinyl alcohol copolymer due to its oxygen permeation rate. These resins may be used singly or in combination of two or more kinds thereof.

An antioxidant; a heat-resistant stabilizer; a weather-resistant stabilizer; an ultraviolet absorber; a light stabilizer; a tackifier; an antistatic agent; a filler; a plasticizer; an anti-blocking agent; an anti-fogging agent; a lubricant; a reinforcing material; a deodorant or an adsorbent; a flame retardant; a dehydrating agent; a pot life extender; a coloring agent; a pigment; a blowing agent; a mold releasing agent; a coupling agent; a surfactant; a leveling agent; a cissing-improving agent can be added, if desired, to the heat-sealable resin constituting the sealing material layer.

Examples of the antioxidant include antioxidants of the same kind that can be added in the cyclized product of a conjugated diene polymer.

Examples of the tackifier include hydrogenated petroleum resins, hydrogenated terpene resins, castor oil derivatives, sorbitan higher fatty acid esters, low-molecular weight polybutene.

Examples of the antistatic agent include glycerin esters, sorbitan acid esters, polyethylene glycol esters, of a higher fatty acid.

Examples of the filler include calcium carbonate, alumina, titanium oxide.

Examples of the plasticizer include phthalic esters, glycol esters.

Examples of the anti-blocking agent include silica, calcium carbonate, talc, zeolite, starch. The anti-blocking agent may be kneaded into the resin or may be attached onto a surface of the resin.

Examples of the anti-fogging agent include a higher fatty acid glyceride such as diglycerin monolaurate, diglycerin monopalmitate, diglycerin monooleate, diglycerin dilaurate or triglycerin monooleate; a polyethylene glycol higher fatty acid ester such as polyethylene glycol oleate, polyethylene glycol laurate, polyethylene glycol palmitate or polyethylene glycol stearate; a polyoxyethylene higher fatty acid alkyl ether such as polyoxyethylene lauryl ether or polyoxyethylene oleyl ether.

Examples of the lubricant include higher fatty acid amides such as stearic acid amide, oleic acid amide, erucic acid amide, behenic acid amide, ethylene bisstearic acid amide, ethylene bisoleic acid amide, and the like; higher fatty acid esters; waxes.

Examples of the reinforcing material include metallic fibers, glass fibers, carbon fibers.

Examples of the deodorant or adsorbent include those which are known by themselves, for example, natural zeolite, synthetic zeolite, silica gel, activated carbon, impregnated activated carbon, activated clay, activated aluminum oxide, clay, diatomaceous earth, kaolin, talc, bentonite, magnesium oxide, iron oxide, aluminum hydroxide, magnesium hydroxide, iron hydroxide, magnesium silicate, aluminum silicate, synthetic hydrotalcite, amine-supporting porous silica. Of these, those containing an amino group such as amine-supporting porous silica are preferable from the viewpoint of reactivity with an aldehyde.

These deodorants or adsorbents may be used singly or in combination of two or more kinds thereof.

In order to distribute uniformly such a deodorant or adsorbent in the' sealing material layer with ease, it is preferable that a dispersed average particle size is not more than 10 $\mu$m.

Examples of the flame retardant include phosphoric esters, halogenated phosphoric esters, halides.

Examples of the dehydrating agent include alkaline earth metal oxides.

Examples of the pot life extender include acetylacetone, methanol, methyl orthoacetate.

Examples of the coloring agent or the pigment include various azo pigments such as phthalocyanine-based, indigo-based, quinacridone-based or metallic complex salt-based pigments; basic or acidic water-soluble dyes; oil-soluble dyes such as azo-based, anthraquinone-based or perylene-based oil-soluble dyes; metal oxides such as titanium oxide, iron oxide or complex oxides; and other inorganic pigments such as chromate-based, sulfide-based, silicate-based or carbonate-based inorganic pigments.

Examples of the blowing agent include methylene chloride, butane, azobisisobutyronitrile.

Examples of the mold releasing agent include polyethylene waxes, silicone oils, long-chain carboxylic acids, long-chain carboxylic acid metal salts.

Examples of the coupling agent include silane-based, titanate-based, chromium-based and aluminum-based coupling agents.

An oxygen permeability at 20°C and a relative humidity of 65% of the sealing material layer of the invention does not rely upon the number, the thickness and constitutional materials of the layer, and is preferably 200 cc (20 $\mu$m) /m$^2$.atm.day or more, and especially preferably 400 cc (20 $\mu$m)/m$^2$.atm.day or more. When the oxygen permeability of the sealing material layer is lower than 200 cc (20 $\mu$m)/m$^2$.atm.day, it determines the rate of oxygen absorption to be carried out by the oxygen absorbing layer, and there may be a risk that the oxygen absorption rate of the packaging container is reduced.

The permeability is expressed by a volume of a gas passing through a specimen of a unit area in a unit partial pressure difference for a unit time and can be measured by a method conforming to JIS K7126, "Test method for gas permeation rate of plastic films and sheets".

The shape of the oxygen-absorbing gas barrier multi-layer structure of the invention is not particularly limited and may be in any one of a film form, a sheet form, a' plate form or may be a shape of every molded article such as a bottle.

In the oxygen-absorbing gas barrier multi-layer structure of the invention, a protective layer can be formed on the outside of the oxygen-absorbing gas barrier structure layer for the purpose of imparting heat resistance or other purposes.

Examples of a resin used for the protective layer include ethylene polymers such as high-density polyethylene; propylene polymers such as a propylene homopolymer, a propylene/ethylene random copolymer or a propylene/ethylene block copolymer; polyamides such as nylon 6 or nylon 66; polyesters such as polyethylene terephthalate. Of these, polyamides and polyesters are preferable.

The oxygen-absorbing gas barrier multi-layer structure of the invention comprises basically an oxygen-absorbing gas barrier structure layer and a sealing material layer laminated and may have a supporting substrate layer, if desired.

Examples of a material which constitutes the supporting substrate layer include poly-$\alpha$-olefin resins; polyester resins such as polyethylene terephthalate (PET); polyamide resins such as polyamide 6 or polyamide 6/polyamide 66 copolymers; natural fibers; synthetic fibers; and papers obtained by paper making of these materials.

Though the supporting substrate layer may be provided between the oxygen-absorbing barrier structure layer and the sealing material layer of the oxygen-absorbing gas barrier multi-layer structure of the invention, it is preferably provided on the outside of the oxygen-absorbing gas barrier structure layer.

In the oxygen-absorbing gas barrier multi-layer structure of the invention, since adhesiveness between the oxygen-absorbing gas barrier structure layer and the sealing material layer is good, it is not particularly necessary to provide an adhesive layer between these layers, but an adhesive layer may be formed in order to enhance the adhesiveness between these layers. A film or sheet of a resin capable of being melted by heat and mutually fused can be used for the adhesive layer. Specific examples of such a resin include homopolymers or copolymers of an $\alpha$-olefin such as low-density polyethylene, linear low-density polyethylene, medium-density polyethylene, high-density polyethylene or polypropylene; ethylene/vinyl acetate copolymers, ethylene/acrylic acid copolymers, ethylene/ethyl acrylate copolymers, ethylene/methacrylic acid copolymers, and ethylene/methyl methacrylate copolymers; acid-modified poly-$\alpha$-olefin resins obtained by modifying an $\alpha$-olefin (co)polymer such as polyethylene or polypropylene with an unsaturated carboxylic acid such as acrylic acid, methacrylic acid, maleic acid or maleic anhydride; ionomer resins obtained by making an Na ion or a Zn ion act on a copolymer of ethylene with methacrylic acid; mixtures thereof.

The thickness of the oxygen-absorbing gas barrier multi-layer structure of the invention is not particularly limited.

The total thickness of the multi-layer film of the invention is usually 15 $\mu$m or more and less than 250 $\mu$m, and preferably from 50 to 150 $\mu$m. The total thickness within the foregoing range allows formation of a multi-layer film having excellent transparency.

The thickness of the oxygen-absorbing gas barrier layer is usually from 5 to 50 $\mu$m, and preferably from 7 to 30 $\mu$m.

The thickness of the sealing material layer is usually from 10 to 150 $\mu$m, and preferably from 20 to 100 $\mu$m.

When the thickness of each layer is too thin, there may be a risk that the thickness is non-uniform or that rigidity or mechanical strengths are insufficient. In the case of a heat-sealable resin, when the thickness is too thick or too thin, there may be a risk that heat-sealing properties are not exhibited.

The manufacturing method of the oxygen-absorbing gas barrier multi-layer structure of the invention is not particularly limited; and single-layer structures (films, etc.) of the respective layers constituting the multi-layer structure may be laminated, or a multi-layer structure may be molded directly.

For example, the multi-layer structure of a multi-layer film can be manufactured from the single-layer films by an extrusion coating method, sandwich lamination, or dry lamination.

For the manufacture of a multi-layer extruded film, a known co-extrusion molding method can be employed; and for example, extrusion molding may be carried out by using extruders in the number corresponding to the kinds of resins.

Examples of the co-extrusion molding method include a co-extrusion lamination method, a co-extrusion sheet molding method, a co-extrusion inflation molding method.

As one example, a raw fabric in a tubular state can be formed by melting and heating each of resins constituting an oxygen-absorbing gas barrier structure layer and a sealing material layer, respectively, by several extruders by means of a water-cooling or air-cooling inflation method; extruding them from a multi-layer ring-like die at an extrusion temperature of, for example, from 190 to 210°C; and immediately thereafter, quenching for solidification the extrudate by a liquid coolant such as cooling water.

In manufacturing the multi-layer sheet, the temperature of each of the oxygen-absorbing gas barrier resin composition, the resin for sealing material and the resin for supporting substrate layer to be used as occasion demands is preferably set up at from 160 to 250°C. There may be a risk that when the temperature is lower than 160°C, uneven thickness or breakage of the film occurs; whereas when it exceeds 250°C, breakage of the film is caused. The temperature is more preferably from 170 to 230°C.

A film take-up rate in the manufacture of a multi-layer sheet is usually from 2 to 200 m/min, and preferably from 50 to 100 m/min. There may be a risk that when the take-up rate is not more than 2 m/min, the production efficiency becomes worse; whereas when it exceeds 200 m/min, the film cannot be sufficiently cooled and may be fused on taking-up.

In the case where the multi-layer sheet comprises a stretchable material and its film properties are enhanced by stretching as in the case of polyamide resins, polyester resins, polypropylene, the multi-layer sheet obtained by co-extrusion can be further uniaxially or biaxially stretched. If desired, heat setting can be further performed.

A stretch ratio is not particularly limited and is usually from 1 to 5 times in a machine direction (MD) and a transverse direction (TD), respectively, and preferably from 2.5 to 4.5 times in the MD and TD, respectively.

The stretching can be carried out by a known method such as a tenter stretching system, an inflation stretching system or a roll stretching system. Though either machine direction stretching or transverse direction stretching may be carried out earlier, simultaneous stretching is preferable. A tubular simultaneous biaxial stretching method may also be employed.

The external layer of the oxygen-absorbing multi-layer structure can be subjected to front surface printing or rear surface printing or the like with a desired printing pattern, for example, letters, figures, symbols, designs, patterns by a usual printing method.

The oxygen-absorbing multi-layer structure of the invention is useful as a packaging material.

A container of every form, for example, liquid packaging containers having a shape such as a gable top, a brick type, a cube or a regular tetrahedron, other containers in a tray or cup form, containers in a pouch form, and the like can be obtained from a packaging material comprising the oxygen-absorbing multi-layer structure of the invention while making the sealing material layer side faced inward.

A molding method for obtaining such a packaging container is not particularly limited, and a stretched molded article can be obtained by reheating a packaging material comprising the oxygen-absorbing gas barrier multi-layer structure at a temperature of not higher than a melting point of the resin constituting this and uniaxially or biaxially stretching it by means of a thermoforming method such as drawing, vacuum forming, pressure forming or press forming, a roll stretching method, a pantograph type stretching method, an inflation stretching method.

The packaging container obtained from the packaging material comprising the oxygen-absorbing gas barrier multi-layer structure of the invention is able to accommodate therein various commodities, for example, liquid foodstuffs represented by liquid beverages such as juices, coffees, teas, jelly beverages or health drinks; seasonings such as seasoning liquids, sauces, cooking oils, dressings, liquid stocks, tomato ketchup, mayonnaise, *miso* or grated spices; pasty foodstuffs such as jams, creams, yogurt or jellies; processed foodstuffs such as liquid soups, boiled foods, pickles or stews; besides, chemicals in a solid state or solution state such as agricultural chemicals or insecticides; drugs in a liquid or paste state; cosmetics such as toilet lotions, facial creams, milky lotions, hair liquids or hair dyes; cleaning materials such as tooth pastes, shampoos, soaps or detergents; medical equipment and supplies. In the packaging container of the invention, since oxygen does not permeate from the outside of the container and oxygen on the inside of the container is absorbed by the oxygen-absorbing gas barrier structure layer, oxidative corrosion or the like of the article is prevented, and a good quality can be kept over a long period of time.

EXAMPLES

The invention is more specifically described below with reference to the following Preparation Examples and Examples. Parts and percentages in the respective Examples are on a mass basis unless otherwise indicated.

Respective properties were evaluated in the following methods.

[Weight-average molecular weight (Mw) of a cyclized product of a conjugated diene polymer]

This is determined as a molecular weight in terms of polystyrene by employing gel permeation chromatography.

[Rate of reduction of unsaturated bonds of a cyclized product of a conjugated diene polymer]

This is determined by means of proton NMR measurement while referring to methods described in the following documents (i) and (ii).

(i) M.A. Golub and J. Heller, Can. J. Chem., Vol. 41. p.937 (1963)
(ii) Y. Tanaka and H. Sato, J. Polym. Sci.: Poly. Chem. Ed., Vol. 17, p.3027 (1979)

In the conjugated diene monomer unit segment in the conjugated diene polymer, a peak area of all protons and a peak area of protons bonded directly to the double bond before the cyclization reaction are defined as SBT and SBU, respectively; and a peak area of all protons and a peak area of the protons bonded directly to the double bond after the cyclization reaction are defined as SAT and SAU, respectively. A peak area ratio (SB) of the proton bonded directly to the double bond before the cyclization reaction is determined by "SB = SBU/SBT"; and a peak area ratio (SA) of protons bonded directly to the double bond after the cyclization reaction is determined by "SA = SAU/SAT".

Accordingly, the rate of reduction of unsaturated bonds is determined according to the following expression.

$$[\text{Rate of reduction of unsaturated bond (\%)}] = 100 \times (SB - SA)/SB$$

[Oxygen concentration]

This is measured by using an oxygen analyzer (FOOD CHECKER HS-750 available from Ceramatec, Inc., U.S.A.). The unit is% by volume.

[Oxygen permeation rate]

This is measured under a condition at $20\pm2°C$ and a relative humidity of 65% for a permeation surface of a circle having a diameter of 4.4 cm by using a differential pressure type gas/water vapor permeability analysis system (differential pressure type gas permeation system: GTR-30XAD2, available from GTR Tec Corp., detector: G2700T.F, available from Yanaco Technical Science Inc.) by means of a differential pressure method in conformity with JIS K7126. The unit is cc (20 $\mu$m)/m$^2$.day.atm.

[Water vapor permeability]

This is measured under a condition at 40°C and a relative humidity of 65% for a permeation surface of a circle having a diameter of 6.0 cm in conformity with a cup method of JIS Z0208. The unit is g/m$^2$.24 hr.

[Laminate strength]

A T-peel test is carried out in conformity with JIS K6854. The unit is g/15 mm.

(Preparation Example 1: Preparation of a cyclized product AK of a conjugated diene polymer)

8,000 parts of cyclohexane, 320 parts of styrene and a hexane solution containing 19.9 mmoles of n-butyllithium were charged in an autoclave equipped with a stirrer, an internal temperature was raised to 60°C, and the mixture was polymerized for 30 minutes. A polymerization conversion of styrene was substantially 100%. A part of the polymerization solution was collected, and a weight-average molecular weight of the obtained polystyrene was measured and found to be 14,800.

1,840 Parts of isoprene was continuously added over 60 minutes while controlling the internal temperature so as not to exceed 75°C. After completion of the addition, the reaction was carried out at 70°C for an additional one hour. At this point of time, a polymerization conversion was substantially 100%.

To the obtained polymerization solution, 0.362 part of a 1% aqueous solution of a sodium salt of a $\beta$-naphthalenesulfonic acid/formalin condensate was added to stop the polymerization reaction, and a conjugated diene polymer A of a diblock structure comprising a polystyrene block and a polyisoprene block was obtained. This had a weight-average molecular weight of 178,000.

To the foregoing polymerization solution of the conjugated diene polymer A, a toluene solution of 16.6 parts of p-toluenesulfonic acid (water content: not more than 150 ppm) was added, and cyclization reaction was carried out at 75°C for 6 hours. Thereafter; a 25% sodium carbonate aqueous solution containing 6.39 parts of sodium carbonate was added to stop the cyclization reaction, followed by stirring at 80°C for 30 minutes. Water was removed from the reaction system by means of azeotropic reflux dehydration. The catalyst residue in the reaction system was then removed using a glass fiber filter having a pore size of 2 $\mu$m and a cyclized product AK0 of a conjugated diene polymer was obtained.

To the obtained solution of the cyclized product AK0 of a conjugated diene polymer, a hindered phenolic antioxidant, 2,4-bis-(n-octylthio)-6-(4-hydroxy-3,5-di-t-butylanilino)-1,3,5-triazine in an amount corresponding to 200 ppm relative to the cyclized product AK0 of a conjugated diene polymer and a phosphorus based antioxidant, 2,2'-methylenebis (4,6-di-t-butylphenyl)octyl phosphite in an amount corresponding to 200 ppm relative to the cyclized product AK0 of a conjugated diene polymer were added; a part of cyclohexane in the solution was then distilled off; and cyclohexane and toluene were further removed by vacuum drying to give an antioxidant-containing cyclized product AK of a conjugated diene polymer in a solid state. The cyclized product AK0 of a conjugated diene polymer had a weight-average molecular weight of 193,000 and a rate of reduction of unsaturated bonds of 51.0%. The results are shown in Table 1.

The obtained cyclized product AK of a conjugated diene polymer was kneaded under a kneading condition of a temperature of a cylinder 1 of 140°C, a temperature of a cylinder 2 of 150°C, a temperature of a cylinder 3 of 160°C, a temperature of a cylinder 4 of 170°C and a temperature of a die of 170°C and a revolution number of 25 rpm by using a short-screw kneading extruder (short-screw kneading extruder available from Ikegai, Ltd. (40 $\phi$, L/D = 25, die $\phi$ = 3 mm, single nozzle)) and pelletized to give a pellet ak.

(Preparation Example 2: Preparation of cyclized product BK of a conjugated diene polymer and a cyclized product BK of a conjugated diene polymer/polyethylene blend)

A pressure-resistant reactor equipped with a stirrer, a thermometer, a reflux condenser and a nitrogen gas introduction pipe was charged with 300 parts of polyisoprene (cis-1,4-bond structural unit: 73%, trans-1,4-bond structural unit: 22%, 3,4-bond structural unit: 5%, weight-average molecular weight: 154,000) as cut into a size of 10 mm in square along with 700 parts of cyclohexane, and the inside of the reactor was purged with nitrogen. The contents were heated at 75°C; polyisoprene was completely dissolved in cyclohexane under stirring; 2.4 parts of p-toluenesulfonic acid having a water content of not more than 150 ppm in a state of a 25% toluene solution was then added; and cyclization reaction was carried out at 80°C or below. The reaction was continued for 7.5 hours, and 3.68 parts of a 25% sodium carbonate aqueous solution was then added to stop the reaction. Water was removed at 80°C by means of azeotropic reflux dehydration, and the catalyst residue in the system was then removed by using a glass fiber filter having a pore size of 2 $\mu$m to give a solution of a cyclized product BK0 of a conjugated diene polymer.

To the obtained solution of the cyclized product BK0 of a conjugated diene polymer, a hindered phenolic antioxidant, 2,4-bis-(n-octylthio)-6-(4-hydroxy-3,5-di-t-butylanilino)-1,3,5-triazine in an amount corresponding to 400 ppm relative to the cyclized product BK0 of a conjugated diene polymer, a phosphorus-containing antioxidant, 2,2'-methylenebis(4,6-di-t-butylphenyl)octyl phosphite in an amount corresponding to 800 ppm relative to the cyclized product BK0 of a conjugated diene polymer and 35 parts, based on 100 parts of the cyclized product BK of a conjugated diene polymer, of a polyethylene pellet (a trade name "MORETEC 0438" available from Idemitsu Petrochemical Co., Ltd., melt flow rate (MFR) = 4.0 (g/10 min at 190°C under a load of 2.16 kg)) were added; a part of cyclohexane in the solution was then distilled off; and cyclohexane and toluene were further removed by vacuum drying to give an antioxidant-containing cyclized product BK of a conjugated diene polymer/polyethylene blend in a solid state. Separately, only the foregoing two kinds of antioxidants were added to the solution of the cyclized product BK0 of a conjugated diene polymer; a part of cyclohexane in the solution was then distilled off; and cyclohexane and toluene were further removed by vacuum drying to give a cyclized product BK of a conjugated diene polymer. The cyclized product BK0 of a conjugated diene polymer had a weight-average molecular weight of 138,000 and a rate of reduction of unsaturated bonds of 46.5%.

The foregoing cyclized product BK of a conjugated diene polymer/polyethylene blend was kneaded under the same kneading condition as in Preparation Example 1 and pelletized to give a pellet bk/e of the cyclized product BK of a conjugated diene polymer/polyethylene blend.

(Preparation Example 3)

A pellet a/e of a conjugated diene polymer A/polyethylene blend was obtained in the same manner as in Preparation Example 2, except for using the conjugated diene polymer A in place of the cyclized product BK of a conjugated diene polymer.

(Examples 1 to 4 and Comparative Examples 1 to 3)

A pellet ev1 of an ethylene/vinyl alcohol copolymer 1 (EVAL H101B available from Kuraray Co., Ltd., oxygen permeation rate: 0.8 cc (20 $\mu$m)/m$^2$.day.atm, water vapor permeability: 28 g/m$^2$.24 hr, MFR = 1.6 (g/10 min at 190°C under a load of 2.16 kg)), a pellet ev2 of an ethylene/vinyl alcohol copolymer 2 (EVAL E105B available from Kuraray Co., Ltd., oxygen permeation rate: 1.3 cc (20 $\mu$m)/m$^2$.day.atm, water vapor permeability: 19 g/m$^2$.24 hr, MFR = 5.5(g/10 min at 190°C under a load of 2.16 kg)) and pellets ak, bk/e and a/e obtained in Preparation Examples 1, 2 and 3, respectively, were kneaded in a blending ratio as shown in Table 1 under a kneading condition of a temperature of a cylinder 1 of 165°C, a temperature of a cylinder 2 of 175°C, a temperature of a cylinder 3 of 185°C, a temperature of a cylinder 4 of 190°C and a temperature of a die of 190°C and a revolution number of 25 rpm by using a short-screw kneading extruder (short-screw kneading extruder available from Ikegai, Ltd. (40 $\phi$, L/D = 25, die $\phi$ = 3 mm, single nozzle)) and pelletized to give pellets pd to pg (oxygen-absorbing gas barrier resin compositions of the invention) and ph to pj as shown in Table 1.

(Examples 5 to 8 and Comparative Examples 4 to 6)

The pellets pd to pj prepared in Examples 1 to 4 and Comparative Examples 1 to 3 were extrusion-molded into corresponding films d to j having a width of 100 mm and a thickness of 20 $\mu$m by using a molding apparatus configured by connecting a T-die (die temperature: 200°C) and a twinscrew stretching tester (available from Toyo Seiki Seisaku-Sho, Ltd.) to a LABO PLASTOMIL short-screw extruder (available from Toyo Seiki Seisaku-Sho, Ltd.).

The oxygen gas permeation rate and the water vapor permeability of these films d to j were measured. The results are shown in Table 2.

Also, each of these films d to j was cut into a size of 200 mm x 200 mm and put in an aluminum pouch (HI RETORT ALUMINUM ALH-9 available from Sakura Bussan K.K.); air on the inside was completely removed; 100 cc of air having an oxygen concentration of 20.7% was then enclosed therein; and after storage at 40°C for 30 days, the oxygen concentration in the pouch was measured. The results are shown in Table 2.

(Examples 9 to 12 and Comparative Examples 7 to 9)

A non-stretched polypropylene film having a thickness of 30 μm as prepared from polypropylene "F-734NP" available from Idemitsu Petrochemical Co., Ltd. (melt flow rate (MFR) = 6.9 (g/10 min at 190°C under a load of 2.16 kg)) and each of the foregoing films d to j were subjected to lamination bonding by using a hot roll laminator (a trade name "EXCELAM II 355Q" available from Gmp Co., Ltd.) to give corresponding laminated films Ld to Lj, respectively.

A strip specimen of 15 mm x 150 mm was cut out from each of the obtained laminated films Ld to Lj, and the laminate strength between the polypropylene film and each of the films d to j was measured. The results are shown in Table 2.

Table 1

| | | | Example | | | | Comparative Example | | |
|---|---|---|---|---|---|---|---|---|---|
| | | | 1 | 2 | 3 | 4 | 1 | 2 | 3 |
| Cyclized product of a conjugated diene polymer (and polyethylene) | | | | | | | | | |
| | Pellet No. | | ak | bk/e | ak | ak | a/e | a/e | - |
| | Raw material polymer (parts) | | | | | | | | - |
| | | Cyclized product AK of a conjugated diene polymer | 20 | - | 40 | 20 | - | - | - |
| | | Cyclized product BK of a conjugated diene polymer | - | 20 | - | - | - | - | - |
| | | Conjugated diene polymer A | - | - | - | - | 20 | 20 | - |
| | | Polyethylene | - | 7 | - | - | 7 | 7 | - |
| Ethylene/vinyl alcohol copolymer | | | | | | | | | |
| | Pellet No. | | ev1 | ev1 | ev2 | ev2 | ev2 | ev2 | ev2 |
| | Raw material polymer (parts) | | | | | | | | |
| | | Ethylene/vinyl alcohol copolymer 1 | 80 | 80 | - | - | - | - | - |
| | | Ethylene-vinyl alcohol copolymer 2 | - | - | 60 | 80 | 80 | 80 | 100 |
| Cobalt stearate | | | - | - | - | - | - | 0.2 | 0.2 |
| Resin composition pellet | | | pd | pe | pf | pq | ph | pi | pj |
| Film | | | d | e | f | g | h | i | j |

From the results of Table 2, it is noted that the oxygen-absorbing gas barrier resin composition of the invention which comprises a cyclized product of a conjugated diene polymer and an ethylene/vinyl alcohol copolymer (Examples 5 to 8) has a lower oxygen permeation rate than that the ethylene/vinyl alcohol copolymer used as a raw material (Comparative Example 3) and exhibits excellent oxygen absorbability. It is also noted that the oxygen-absorbing gas barrier resin composition of the invention has a lower water vapor permeability than the ethylene/vinyl alcohol copolymer used as a raw material (Comparative Example 3) and is excellent as an oxygen-absorbing gas barrier resin composition.

Furthermore, it is noted that the oxygen-absorbing gas barrier multi-layer structure of the invention has excellent laminate strength between the oxygen-absorbing gas barrier structure layer and the sealing material layer (Examples 9 to 12).

Table 2

|  | Example | | | | Comparative Example | | |
|---|---|---|---|---|---|---|---|
|  | 5 | 6 | 7 | 8 | 4 | 5 | 6 |
| Film | d | e | f | g | h | i | j |
| Oxygen permeation rate (cc (20 $\mu$m) /m$^2$·day·atm) | 0.21 | 0.16 | 0.09 | 0.43 | 1.9 | 0.90 | 0.51 |
| Water vapor permeability (g/m$^2$·24 hr) | 15 | 16 | 6.5 | 14 | 17 | 18 | 18 |
| Oxygen concentration (% by volume) | 1.1 | 1.0 | 0.1 | 0.9 | 20.6 | 5.6 | 5.5 |

Table 2 (Cont'd.)

|  | Example | | | | Comparative Example | | |
|---|---|---|---|---|---|---|---|
|  | 9 | 10 | 11 | 12 | 7 | 8 | 9 |
| Laminated film | Ld | Le | Lf | Lg | Lh | Li | Lj |
| Laminate strength (g/15 mm) | 0.9 | 1.2 | 0.6 | 0.7 | 0.1 | 0.1 | 0.1 |

## Claims

1. An oxygen-absorbing gas barrier resin composition that comprises a cyclized product of a conjugated diene polymer and an ethylene/vinyl alcohol copolymer having an ethylene content of 15% to 45% by mole and an oxygen permeation rate as measured in conformity with JIS K7126 of from 0.2 to 20 cc/m$^2$.day.atm at 20°C and a relative humidity of 65% for a film having a thickness of 20 $\mu$m, with a weight ratio of the cyclized product of a conjugated diene polymer and the ethylene/vinyl alcohol copolymer of 50/50 to 5/95.

2. The oxygen-absorbing gas barrier resin composition according to claim 1, wherein the cyclized product of a conjugated diene polymer has a rate of reduction of unsaturated bonds of 10% or more as determined by the following expression:

$$[\text{Rate of reduction of unsaturated bond (\%)}] = 100 \times (SB - SA)/SB,$$

wherein SA is a peak area ratio of protons bonded directly to the double bond after the cyclization reaction determined by "SA = SAU/SAT"; SB is a peak area ratio of the proton bonded directly to the double bond before the cyclization reaction determined by "SB = SBU/SBT"; SBT and SBU are a peak area of all protons and a peak area of protons bonded directly to the double bond before the cyclization reaction, respectively; and SAT and SAU are a peak area of all protons and a peak area of the protons bonded directly to the double bond after the cyclization reaction, respectively, in the conjugated diene monomer unit segment in the conjugated diene polymer.

3. The oxygen-absorbing gas barrier resin composition according to claim 2, wherein the cyclized product of a conjugated diene polymer has a rate of reduction of unsaturated bonds of from 30 to 75% by weight.

4. The oxygen-absorbing gas barrier resin composition according to any one of claims 1 to 3, wherein the cyclized product of a conjugated diene polymer is a cyclized product of polyisoprene and/or a cyclized product of a block copolymer comprising an aromatic vinyl polymer block having a weight-average molecular weight of from 1,000 to 500,000 and at least one conjugated diene polymer block.

**5.** The oxygen-absorbing gas barrier resin composition according to any one of claims 1 to 4, wherein the cyclized product of a conjugated diene polymer is one containing not more than 8,000 ppm of an antioxidant.

**6.** The oxygen-absorbing gas barrier resin composition according to claims 1 to 5, wherein the weight ratio of the cyclized product of a conjugated diene polymer and the ethylene/vinyl alcohol copolymer is from 40/60 to 20/80.

**7.** The oxygen-absorbing gas barrier resin composition according to any one of claims 1 to 6, further comprising an $\alpha$-olefin resin other than the ethylene/vinyl alcohol copolymer.

**8.** The oxygen-absorbing gas barrier resin composition according to claim 7, wherein the content of the $\alpha$-olefin resin other than the ethylene/vinyl alcohol copolymer is from 10 to 150 parts by weight based on 100 parts by weight of the cyclized product of a conjugated diene polymer.

**9.** An oxygen-absorbing gas barrier structure obtained by molding the oxygen-absorbing gas barrier resin composition according to any one of claims 1 to 8.

**10.** The oxygen-absorbing gas barrier structure according to any one of claim 9, having an oxygen permeation rate of not more than 1 cc/m$^2$.day.atm at 20°C and a relative humidity of 65% for a film having a thickness of 20 $\mu$m.

**11.** An oxygen-absorbing gas barrier multi-layer structure comprising a layer of the oxygen-absorbing gas barrier structure according to claim 9 or 10 and a sealing material layer.

**12.** A packaging material comprising the oxygen-absorbing gas barrier multi-layer structure according to claim 11.

**Patentansprüche**

**1.** Sauerstoff-absorbierende Gassperrharzzusammensetzung, die ein cyclisiertes Produkt eines konjugierten Dienpolymers und eines Ethylen/Vinylalkohol-Copolymers mit einem Ethylengehalt von 15 Mol-% bis 45 Mol-% und einer Sauerstoffdurchlässigkeitsrate, gemessen gemäß JIS K7126 von 0,2 bis 20 cc/m$^2$.Tag.atm bei 20°C und einer relativen Feuchtigkeit von 65% für einen Film mit einer Dicke von 20 $\mu$m aufweist, mit einem Gewichtsverhältnis des cyclisierten Produkts des konjugierten Dienpolymers und des Ethylen/Vinylalkohol-Copolymers von 50/50 bis 5/95.

**2.** Sauerstoff-absorbierende Gassperrharzzusammensetzung gemäß Anspruch 1, wobei das cyclisierte Produkt des konjugierten Dienpolymers eine Verringerungsrate ungesättigter Bindungen von 10% oder mehr aufweist, bestimmt gemäß dem folgenden Ausdruck:

$$[\text{Verringerungsrate ungesättigter Bindungen (\%)}] = 100 \times (SB - SA)/SB,$$

wobei SA das Peakflächenverhältnis von Protonen, die direkt an die Doppelbindungen gebunden sind, nach der Cyclisierungsreaktion ist, bestimmt gemäß "SA = SAU/SAT"; SB ist das Peakflächenverhältnis des Protons, das direkt an die Doppelbindung gebunden ist, vor der Cyclisierungsreaktion, bestimmt gemäß "SB = SBU/SBT"; SBT und SBU bezeichnen die Peakfläche aller Protonen bzw. die Peakfläche von Protonen, die direkt an die Doppelbindung gebunden sind, vor der Cyclisierungsreaktion und SAT und SAU bezeichnen die Peakfläche aller Protonen bzw. die Peakfläche der Protonen, die direkt an die Doppelbindung gebunden sind, nach der Cyclisierungsreaktion, im konjugierten Dienmonomereinheitssegment im konjugierten Dienpolymer.

**3.** Sauerstoff-absorbierende Gassperrharzzusammensetzung gemäß Anspruch 2, wobei das cyclisierte Produkt des konjugierten Dienpolymers eine Verringerungsrate ungesättigter Bindungen von 30 bis 75 Gew.-% aufweist.

**4.** Sauerstoff-absorbierende Gassperrharzzusammensetzung gemäß einem der Ansprüche 1 bis 3, wobei das cyclisierte Produkt des konjugierten Dienmonomers das cyclisierte Produkt von Polyisopren und/oder einem cyclisierten Produkt eines Block-Copolymers, umfassend einen aromatischen Vinylpolymerblock mit einem gewichtsmittleren Molekulargewicht von 1000 bis 500000 und wenigstens einem konjugierten Dienpolymerblock ist.

5. Sauerstoff-absorbierende Gassperrharzzusammensetzung gemäß einem der Ansprüche 1 bis 4, wobei das cyclisierte Produkt des konjugierten Dienpolymers ein solches ist, das nicht mehr als 8000 ppm eines Antioxidans enthält.

6. Sauerstoff-absorbierende Gassperrharzzusammensetzung gemäß einem der Ansprüche 1 bis 5, wobei das Gewichtsverhältnis des cyclisierten Produkts des konjugierten Dienpolymers und des Ethylen/Vinylalkohol-Copolymers 40/60 bis 20/80 beträgt.

7. Sauerstoff-absorbierende Gassperrharzzusammensetzung gemäß einem der Anprüche 1 bis 6, des Weiteren umfassend ein $\alpha$-Olefinharz, das von dem Ethylen/Vinylalkohol-Copolymer verschieden ist.

8. Sauerstoff-absorbierende Gassperrharzzusammensetzung gemäß Anspruch 7, wobei der Gehalt des $\alpha$-Olefinharzes, das von dem Ethylen/Vinylalkohol-Copolymer verschieden ist, von 10 bis 150 Gewichtsteilen, bezogen auf 100 Gewichtsteile des cyclisierten Produkts des konjugierten Dienpolymers, beträgt.

9. Sauerstoff-absorbierende Gassperrstruktur, erhalten durch Gießen der Sauerstoff-absorbierenden Gassprerrharzzusammensetzung gemäß einem der Ansprüche 1-8.

10. Sauerstoff-absorbierende Gassperrstruktur gemäß Anspruch 9 mit einer Sauerstoffdurchlässigkeitsrate von nicht mehr als 1 cc/m$^2$.Tag.atm bei 20°C und einer relativen Feuchtigkeit von 65% für einen Film mit einer Dicke von 20 $\mu$m.

11. Sauerstoff-absorbierende Gassperr-Multischichtstruktur mit einer Schicht aus der Sauerstoffabsorbierenden Gassperrstruktur gemäß Anspruch 9 oder 10 und einer Dichtungsmaterialschicht.

12. Verpackungsmaterial, umfassend die Sauerstoff-absorbierende Gassperr-Multischichtstruktur gemäß Anspruch 11.

**Revendications**

1. Composition de résine de barrière contre les gaz absorbant l'oxygène, qui comprend un produit cyclisé d'un polymère diénique conjugué et un copolymère d'éthylène/alcool vinylique présentant une teneur en éthylène de 15 % à 45 % en mole et un taux de perméation à l'oxygène tel que mesuré conformément à la norme JIS K7126 de 0,2 cc/m$^2$.jour.atm à 20 cc/m$^2$.jour.atm à 20 °C et à une humidité relative de 65 % pour un film ayant une épaisseur de 20 $\mu$m, avec un rapport pondéral entre le produit cyclisé d'un polymère diénique conjugué et le copolymère d'éthylène/alcool vinylique de 50/50 à 5/95.

2. Composition de résine de barrière contre les gaz absorbant l'oxygène selon la revendication 1, dans laquelle le produit cyclisé d'un polymère diénique conjugué présente un taux de réduction de liaisons insaturées supérieur ou égal à 10 %, tel que déterminé par l'expression suivante :

$$[\text{Taux de réduction de liaison insaturée (\%)}] = 100 \times (SB - SA)/SB,$$

dans laquelle SA est un rapport des surfaces des pics des protons liés directement à la double liaison après la réaction de cyclisation, déterminé par « SA = SAU/SAT » ; SB est un rapport des surfaces des pics du proton lié directement à la double liaison avant la réaction de cyclisation, déterminé par « SB = SBU/SBT » ; SBT et SBU sont, respectivement, une surface des pics de tous les protons et une surface des pics des protons liés directement à la double liaison avant la réaction de cyclisation ; et SAT et SAU sont, respectivement, une surface des pics de tous les protons et une surface des pics des protons liés directement à la double liaison après la réaction de cyclisation, dans le segment à motif monomère diénique conjugué dans le polymère diénique conjugué.

3. Composition de résine de barrière contre les gaz absorbant l'oxygène selon la revendication 2, dans laquelle le produit cyclisé d'un polymère diénique conjugué présente un taux de réduction des liaisons insaturées de 30 % à 75 % en poids.

4. Composition de résine de barrière contre les gaz absorbant l'oxygène selon l'une quelconque des revendications 1 à 3, dans laquelle le produit cyclisé d'un polymère diénique conjugué est un produit cyclisé de polyisoprène et/ou un produit cyclisé d'un copolymère séquencé comprenant une séquence de polymère vinylique aromatique possédant un poids moléculaire moyen en poids de 1000 à 500 000 et au moins une séquence de polymère diénique conjugué.

**5.** Composition de résine de barrière contre les gaz absorbant l'oxygène selon l'une quelconque des revendications 1 à 4, dans laquelle le produit cyclisé d'un polymère diénique conjugué est un produit cyclisé d'un polymère diénique conjugué contenant au plus 8000 ppm d'un antioxydant.

**6.** Composition de résine de barrière contre les gaz absorbant l'oxygène selon l'une quelconque des revendications 1 à 5, dans laquelle le rapport pondéral entre le produit cyclisé d'un polymère diénique conjugué et le copolymère d'éthylène/alcool vinylique est de 40/60 à 20/80.

**7.** Composition de résine de barrière contre les gaz absorbant l'oxygène selon l'une quelconque des revendications 1 à 6, comprenant en outre une résine d'α-oléfine différente du copolymère d'éthylène/alcool vinylique.

**8.** Composition de résine de barrière contre les gaz absorbant l'oxygène selon la revendication 7, dans laquelle la teneur en résine d'α-oléfine différente du copolymère d'éthylène/alcool vinylique est de 10 parties à 150 parties en poids sur la base de 100 parties en poids du produit cyclisé d'un polymère diénique conjugué.

**9.** Structure de barrière contre les gaz absorbant l'oxygène obtenue par le moulage de la composition de résine de barrière contre les gaz absorbant l'oxygène selon l'une quelconque des revendications 1 à 8.

**10.** Structure de barrière contre les gaz absorbant l'oxygène selon la revendication 9, présentant un taux de perméation à l'oxygène d'au plus 1 cc/m$^2$.jour.atm à 20 °C et à une humidité relative de 65 % pour un film ayant une épaisseur de 20 μm.

**11.** Structure multicouche de barrière contre les gaz absorbant l'oxygène, comprenant une couche de la structure de barrière contre les gaz absorbant l'oxygène selon la revendication 9 ou 10 et une couche de produit d'étanchéité.

**12.** Matériau d'emballage comprenant la structure multicouche de barrière contre les gaz absorbant l'oxygène selon la revendication 11.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4211444 A
- JP 5156095 A
- JP 5170950 A
- EP 1731543 A
- EP 1704917 A
- JP 2005008823 A
- EP 1314761 A

**Non-patent literature cited in the description**

- **M.A. GOLUB ; J. HELLER.** *Can. J. Chem.,* 1963, vol. 41, 937
- **Y. TANAKA ; H. SATO.** *J. Polym. Sci.: Poly. Chem. Ed.,* 1979, vol. 17, 3027